# NEUE EUROPÄISCHE PATENTSCHRIFT

(11) **EP 1 494 967 B2**
(45) Veröffentlichungstag und Bekanntmachung des Hinweises auf die Entscheidung über den Einspruch: **15.04.2015**
(45) Hinweis auf die Patenterteilung: 15.11.2006
(21) Anmeldenummer: 02795029.4
(22) Anmeldetag: 20.12.2002
(51) Int. Cl.: C01B 11/02

(54) **VERFAHREN UND KIT ZUR HERSTELLUNG VON CHLORDIOXID IM GEMISCH MIT SAUERSTOFF**
METHOD AND KIT FOR THE PRODUCTION OF CHLORINE DIOXIDE MIXED WITH OXYGEN
PROCEDE ET KIT POUR LA PREPARATION DE DIOXYDE DE CHLORE MELANGE A DE L'OXYGENE

(30) Priorität: 24.12.2001 DE 10164106
(43) Veröffentlichungstag der Anmeldung: 12.01.2005
(73) Patentinhaber: Khalaf, Hosni, 30900 Wedemark (DE)
(72) Erfinder: Khalaf, Hosni, 30900 Wedemark (DE)
(74) Vertreter: Lins, Martina
(86) Internationale Anmeldenummer: PCT/DE2002/004707
(87) Internationale Veröffentlichungsnummer: WO 2003/055797

(56) Entgegenhaltungen:
- EP-A2- 0 169 498
- EP-B1- 0 516 074
- EP-B1- 0 822 920
- WO-A-96/33947
- WO-A1-94/00158
- DE-A- 19 518 464
- DE-A1- 4 132 867
- DE-A1- 19 514 612
- DE-A1- 19 529 504
- DE-C1- 19 503 900
- Degussa AG, Info. zu "Caroat"
- FALBE, J. ET AL: 'Römpp Chemie Lexikon', Bd. 9 AUFLAG, 1995, GEORG THIEME VERLAG, STUTTGART Seite 3811
- Internetinformation "DK-DOX"
- COTTON, F.A. ET AL: 'Anorganische Chemie', 1967, VERLAG CHEMIE GMBH, WEINHEIM Seite 514
- Ullmanns Encyklopädie der technischen Chemie, 4. Auflage, Band 17, Seiten 706/707 und 720 bis 723, Verlag Chemie, 1979
- Gmelins Handbuch der Anorganischen Chemie; Schwefel, Teil B, Lieferung 2, System-Nr. 9, 8. Auflage, Seiten 822 und 823, Verlag Chemie GmbH, 1960
- Gmelin Handbuch der Anorganischen Chemie; Schwefel, Ergänzungsband 3, Seiten 334, 336 und 342, 8. Auflage, Springer Verlag, 1980
- NEUMÜLLER, O.-A.: 'Römpps Chemie-Lexikon', 1985, FRANCKH'SCHE VERLAGSHANDLUNG, STUTTGART Seiten 3101 - 3102
- Übersetzung des Begriffs "kit" aus httpdict::leo.org
- Definition des Begriffs "kit" aus www.askoxford.com
- Definition des Begriffs "kit" aus www.wissen.de
- BÖHMLÄNDER, F.: 'Entwicklung von Chlordioxyd aus Natriumchlorit-Lösung mit Hilfr von Schwefelsäure' VOM WASSER Bd. BAND, Nr. 29, 1962, Seiten 78 - 97
- Produktinformation "Purogene(R)" der Bio-Cide International Inc.
- Produktmerkblatt Persulfate Caroat(R) (Degussa GmbH, 2. August 2006)
- DVGW.Arbeitsblatt W291 "Reinigung und Desinfektion von Wasserverteilungsanlagen", verabschiedet am 13. April 1999
- Informationsblatt der Dr. Küke GmbH, 1996 oder 1997 (Zeugenbeweis wird angeboten)
- Produktinformation "DK-DOX" von der webseite www.kueke.de der Dr. Küke GmbH, 2006
- NEUMÜLLER, O.-A.: 'Römpps Chemie Lexicon', 1987, FRANCKH'SCHE VERLAGSHANDLUNG, STUTTGART Seite 359
- JOHNSON, R.W. ET AL: 'Inorganic Chemistry', Bd. 5, NO 11, November 1966 Seiten 2073 - 2074
- FELGER, H.: 'Kunststoff-Handbuch', Bd. 2. AUFL, 1985, CARL HANSER VERLAG, MÜNCHEN Seiten 164 - 166
- NEUMÜLLER, O.-A.: 'Römpps Chemie Lexicon', Bd. BAND 6, 1989, FRANCKH'SCHE VERLAGSHANDLUNG Seite 4249
- ROBERT C.W. ET AL: 'Handbook of Chemistry and Physics', Bd. BAND 6, 1964, THE CHEMICAL RUBBER CO., CLEVELAND Seite D-86
- LIEBAU, A.: 'Dissertation', 1992, MARTIN-LUTHER-UNIVERSITÄT, HALLE-WITTENBERG Seiten 5 - 9
- NEUMÜLLER, O.-A.: 'Römpps Chemie Lexikon', Bd. BAND 3, 1983, FRANCKH'SCHE VERLAGSHANDLUNG, STUTTGART Seite 2111
- DVGW-Regelwerk Merkblatt W 624. Oktober 1996
- "Notice of Proposed and Final Decisions and Directors Finding" des Department of Pesticide Regulation, Pesticide Registration Branch, Sacramento, California, USA, 10. Januar 2000

## Beschreibung

Die Erfindung betrifft ein Verfahren zur Herstellung von Chlordioxid und ein Kit zur Herstellung von Chlordioxid aus gebrauchsfertig konfektionierten Reagenzien.

Chlordioxid ist das technisch bedeutendste Chloroxid und wird vorwiegend zum Bleichen, Desinfizieren und Desodorieren eingesetzt, es ist jedoch schwer handhabbar, da das gasförmige ClO₂ aus Lösungen leicht entweicht und ab einem Partialdampfdruck von 100 mbar (20 °C) explosiv ist.

Bereits aus der DE 195 29 504 A1 ist ein Verfahren zur Herstellung wässriger Chlordioxid-Lösungen durch Oxidation von Chlorit mit Oxosäuren und/oder Oxosäure-Anionen geeigneten Redoxpotentials in einem gepufferten wässrigen Medium bekannt. Dabei wird eine oxosäurehaltige Lösung mit einem pH-Wert kleinergleich 5 mit einer wässrigen Chlorit-Lösung in einem pH-Wertgepufferten System gemischt. Zur Pufferung werden bevorzugt umwelttechnisch sehr problematische Phosphatpuffer verwendet. Die beschriebene Verwendung von Phosphorsäure als pH-Regulator erfolgt in einer Konzentration von ca. 8 g H₃PO₄/l, was nach heutigen Vorstellungen zu viel ist. Das Verfahren soll in Rührkesseln oder Strömungsrohren durchgeführt werden, wobei die Ausgangsstoffe Natriumhypochlorit und Phosphorsäure nur in flüssiger Form erhältlich sind. Das Verfahren ist für den Einsatz im Kleinmaßstab mit einfach handhabbaren Mitteln dadurch ungeeignet. Die mit dem Verfahren gemäß den Beispielen hergestellte Chlordioxidlösung ist hypochlorithaltig, was die Vorteile des Chlordioxids zunichte macht. Ferner weist das Verfahren den gravierenden Nachteil auf, dass sich bei der angegebenen Verfahrensweise und unter den angegebenen Bedingungen Chlorate bilden, beispielsweise bei der Zusammenführung von Hypochloritlösung mit Phosphorsäure. Wie von D'Ans, J. und Freund, H.E.Z., Elektrochem. Ber. Bunsenges. physik. chem. 61 10 (1957) experimentell mit großer Genauigkeit bestätigt, führt die gleichzeitige Anwesenheit von Hypochloritionen und freier hypochloriger Säure bei pH 6,2 bis 7 zu Chloraten. Daher enthalten sowohl die mit Phosphorsäure angesäuerten hypochlorigen/Hypochlorit-Ausgangslösungen als auch die hypochlorige Säure/hypochlorithaltige Chlordioxid-Zubereitung Chlorat, was jedoch vermieden werden sollte. Auch bei der Oxidation von Chlorit mittels Peroxomonosulfat - wie alternativ erwähnt - werden Chlorate gebildet wie in der Literatur beschrieben:

HSO⁻₅ + ClO₂⁻ → HSO⁻₄ + ClO⁻₃

Die DE 195 18 464 beschreibt Formlinge zur Herstellung von Chlordioxid durch Folgereaktionen, bei denen Chlorid zunächst mittels Peroxomonosulfat zu Chlor und weiter Chlorit durch das entstandene Chlor zu Chlordioxid oxidiert werden. In der DE 195 184 64 werden kompatible basische Zusätze, wie Natriumhydrogencarbonat, Natriumcarbonatdekahydrat und Dinatriumhydrogenphosphatdodekahydrat (siehe Spalte 2, Zeile 18, 19) verwendet. Die Angabe des sauren Bestandteils "Metalhydrogensulfat" mit 15 % Gehalt (siehe Spalte 2, Zeile 22) beruht darauf, dass man den prozentualen Gehalt des Caroat an Kaliumhydrogensulfat umgerechnet angegeben hat. Dies bedeutet, dass man kein Natriumhydrogensulfat zusätzlich zugegeben hat. Stöchiometrisch neutralisieren nach der Lehre der DE 195 184 64 die oben genannten basischen Bestandteile das Kaliumhydrogensulfat des Caroats, so dass der pH-Wert der Reaktionslösung um etwa im neutralen Bereich liegt. Bei pH 7 würde das Anfangs-Konzentrationsverhältnis des Chlorits zur chlorigen Säure 100.000:1 betragen. Peroxomonoschwefelsäure ist jedoch nur im sauren Bereich stabil und disproportioniert sonst zu Schwefelsäure und Sauerstoff, der pH-Wert sollte daher während des gesamten Verfahrens, besonders aber zu Beginn des Verfahrens, bezüglich der peroxomonoschwefelsauren Komponenten im sauren Bereich bleiben.

In der WO 96/33947 wird ein Verfahren zur Herstellung von Chlordioxidlösung beim Versetzen einer Chloritlösung mit Natriumperoxodisulfat im pH-Bereich von 5,5 bis 9 beschrieben.

Der Erfindung liegt die Aufgabe zugrunde, ein einfach und sicher handhabbares Verfahren zur Verfügung zu stellen, mit dem Chlordioxid bei Bedarf frisch hergestellt werden kann.

Die Umsetzung sollte mit kurzer Reaktionszeit bei geringer Temperatur, d.h. nicht zwingend wesentlich über Raumtemperatur erfolgen können. Die Bildung von Chlor und Chloraten soll vermieden werden. Das Verfahren soll auch im kleinen Maßstab mit einfachen Mitteln handhabbar sein, um beispielsweise für private Schwimmbäder oder im Bereich der Trinkwasserdesinfektion im Kleinstmaßstab geeignet zu sein.

Die Aufgabe wird gelöst mittels eines Verfahrens nach Anspruch 1. Weitere Ausgestaltungen des Verfahrens sind in den Unteransprüchen gekennzeichnet.

Weiterhin ist zur Lösung der Aufgabe ein Kit zur Herstellung von Chlordioxid im Gemisch mit Sauerstoff vorgesehen, insbesondere für die Wasserbehandlung, welches gebrauchsfertige Lösungen und/oder trockene Zusammensetzungen aufweist, wobei eine gebrauchsfertige Lösung oder trockene Zusammensetzung wenigstens ein Chlorit enthält und eine zweite gebrauchsfertige Lösung oder trockene Zusammensetzung wenigstens ein Peroxomonosulfat im Gemisch mit Peroxodisulfat als Redoxinitiator und wobei die gebrauchsfertigen konfektionierten Reagenzien dergestalt sind, dass sie durch Mischen eine saure wässrige Lösung ergeben. Weitere Ausgestaltungen des Kits sind in den Unteransprüchen gekennzeichnet.

Die Erfindung stellt damit ein Verfahren zur Verfügung, mit dem sich Chlordioxid nach einer Reaktionszeit von weniger als 30 Minuten in saurer wässriger Lösung bei einer Temperatur bereits unter Raumtemperatur (bei ab 10 °C in unter 30 Minuten) praktisch quantitativ herstellen lässt.

Das Verfahren nutzt die Umsetzung von Chlorit mit Peroxomonosulfat (auch als Caroat, Salz der Caro'schen Säure bezeichnet) nach folgender Reaktionsgleichung

4 HSO₅⁻ + 4 ClO₂⁻ → 4 SO₄²⁻ + 4 ClO₂ + 2 H₂O + O₂ (I)

im sauren Medium und in Gegenwart von Peroxodisulfat als Redoxinitiator. Unerwünschte konkurrierende Nebenreaktionen werden unterdrückt.

Die Kombination Peroxomonosulfat/Peroxodisulfat beschleunigt die Initiierung der radikalischen Redoxreaktionen mit Chlorit. Die entstehenden Radikale, das Sulfat-Radikal-Anion und das Peroxomonosulfat-Radikal-Anion beschleunigen die Chlordioxidbildung. Am Ende der Reaktion werden sie vollständig zu Sulfat bzw. Hydrogensulfat umgesetzt.

Durch geeignete stöchiometrische Abstimmung, d.h. Wahl der Konzentration aller Ausgangsstoffe können die Höchstwerte an allen Stoffen/Liter nach der Anwendung in dem zu behandelnden Wasser gemäß der geltenden Trinkwasserverordnung sicher unterschritten bzw. eingehalten werden. Alle in dem Verfahren eingesetzten Ausgangsstoffe können in Form von Pulver, Tabletten und/oder Lösungen benutzt werden.

Das Verfahren läuft bereits ohne Hydrogensulfat in befriedigenden Ausbeuten ab. Der Einsatz von Hydrogensulfat ist jedoch bevorzugt.

Der Zusatz von Hydrogensulfat erhöht die Oxidationswirkung von Peroxomonosulfat/Peroxodisulfat exponentiell.

Bei dem erfindungsgemäßen Verfahren wird demnach Chlordioxid im Gemisch mit Sauerstoff durch Reaktion von Chlorit mit Peroxomonosulfat in saurer wässriger Lösung im Beisein des Peroxodisulfats als Redoxinitiator dargestellt, wobei Hydrogensulfat zugesetzt werden kann.

Als Chlorit wird vorzugsweise Natriumchlorit verwendet, es können jedoch ggf. andere Chlorite oder Mischungen daraus verwendet werden.

Als Peroxomonosulfat wird vorzugsweise Kaliumperoxomonosulfat verwendet. Insbesondere kann ein unter dem Namen Caroat gebräuchliches Kaliumperoxomonosulfat-Tripelsalz (Degussa) eingesetzt werden. Als Redoxinitiator wird vorzugsweise das Natriumsalz Natriumperoxodisulfat eingesetzt.

Als Zusätze mit katalytischer Eigenschaft wird Hydrogensulfat verwendet, vorzugsweise Natriumhydrogensulfat. Das Verfahren sollte bei einem pH-Wert zwischen 1,5 und 3,5 durchgeführt werden, wobei der pH-Wert vorzugsweise mit Hilfe des Hydrogensulfats eingestellt wird.

Das Verfahren kann bei einer beliebigen Temperatur, vorzugsweise zwischen Raumtemperatur und Siedepunkt des Wassers durchgeführt werden, wobei eine Erhöhung der Temperatur zu kürzeren Reaktionszeiten führt, das entstehende ClO₂ jedoch aus der erwärmten Lösung auch leichter entweichen kann. Vorzugsweise wird das Verfahren bei Temperaturen ab 10 °C, bei Raumtemperatur oder um ca. 30 bis 45 °C durchgeführt. Die Erwärmung kann entweder vor dem Reaktionsbeginn (Erwärmung der Eduktlösungen) oder während der Reaktion (nach Zugabe der nicht erwärmten Eduktlösungen) erfolgen. Wenn die Reagenzien in warmem Wasser gelöst werden und keine weitere Wärme im Laufe der Reaktion zugeführt wird, kann die Wasseranfangstemperatur vorteilhafterweise ca. 75 bis 95 °C betragen. Besonders bevorzugt ist die Durchführung des Verfahrens bei unveränderter Wassertemperatur des zu behandelnden Wassers, wenn diese bei 10 bis 50 °C liegt.

Das hier beschriebene Verfahren arbeitet erfindungsgemäß im sauren Milieu, wobei der pH-Wert vorzugsweise ca. 2 beträgt, um sowohl die Oxidationswirkung von Peroxomonosulfat zu erhöhen, als auch die Erhöhung der Konzentration der chlorigen Säure zu erzielen. Das Anfangs-Konzentrationsverhältnis des Chlorits zu der chlorigen Säure (Pkₐ=2) beträgt vorzugsweise um 1:1. Die chlorige Säure lässt sich bekanntlich leichter als ihre konjugierte Base (Chlorit) zu Chlordioxid oxidieren. Dadurch lässt sich die Konkurrenzreaktion - die Chlorbildung - weitgehend ausschalten, wie die kinetischen Messungen zeigen, dass dabei kein Chlor bestimmbar ist. Aus diesem Grund kann der pH-Wert erst nach dem Ablauf der Reaktion durch Zugabe von Basen erhöht werden.

Um die aus dem Verfahren erhaltenen Chlordioxid-Lösungen stabil zu halten, wird in Weiterbildung der Erfindung ein Stabilisatorsystem zur Stabilisierung des pH-Wertes zwischen ca.3,5 und 6,8 zugesetzt. Hierbei handelt es sich vorzugsweise um wenigstens einen der folgenden Stoffe:
Borat, insbesondere Perborat, Fluorid, Percarbonat, basisches Magnesiumcarbonat oder eine Mischung aus wenigstens zwei dieser Stoffe.

Gegenüber den im Stand der Technik bekannten Verfahren weist das erfindungsgemäße Verfahren zahlreiche Vorteile auf. Die gleichzeitige Erzeugung von Sauerstoff (Gleichung 1) verdünnt das entstehende Chlordioxid ohne dessen Wirkung zu beeinträchtigen. Bei dem Verfahren entstehen weder Chlor noch Chlorate, und es tritt auch keine Chloritrückbildung (durch Reduktion von Chlordioxid zu Chlorit) ein. Das Verfahren ermöglicht erstmals eine praktisch vollständige Umsetzung der Edukte zu Chlordioxid; bei geeigneter Wahl der stöchiometrischen Verhältnisse sind am Ende der Reaktion weder Chlorit noch Peroxide nachweisbar.

Sehr vorteilhaft ist auch, dass keine katalysierenden Schwermetallsalze verwendet werden, die wegen ihrer Toxizität, Korrosivität, Bildung von schwerlöslichen Ablagerungen mit bestimmten Anionen oder zersetzenden Wirkung auf Reaktionspartner als nachteilig angesehen werden müssen.

In Weiterbildung der Erfindung ist vorgesehen, dass getrennte Lösungen der Edukte hergestellt und danach zusammengeführt werden, wobei die Reaktion eintritt. Dabei enthält eine erste Lösung ein Chlorit, vorzugsweise Natriumchlorit. Eine zweite Lösung enthält ein Peroxomonosulfat (Caroat), vorzugsweise Kaliumperoxomonosulfat, den Redoxinitiator Peroxodisulfat, wie oben beschrieben, und gegebenenfalls ein Hydrogensulfat, mit dem der gewünschte pH-Wert zwischen 1,5 bis 3,5 und in jedem Falle unter 5 genauer eingestellt werden kann, vorzugsweise Natriumhydrogensulfat. Die Lösungen werden dann zusammengegeben, vermengt und ggf. erwärmt. Dabei können die zusammengegebenen Lösungen erwärmt werden, oder die bereitgestellten Einzellösungen können erwärmt bzw. mit warmem oder heißem Wasser hergestellt und anschließend zusammengegeben werden. Die zusammengegebenen Lösungen können zur besseren Vermischung geschüttelt oder gerührt werden.

Die gleichzeitige Bildung des Sauerstoffs trägt zur Verdünnung der Chlordioxidkonzentration in der Gasphase bei.

Gasförmiges Chlordioxid ist ab einer Konzentration von 300 mg/l bzw. 10 Vol.% explosiv. Der entwichene Sauerstoff verdünnt das gasförmige Chlordioxid, so dass es gefahrloser, besonders in geschlossenen Systemen, z.B. Reaktoren, Vorratsbehältern, zu handhaben ist. Bei diesem Verfahren wird ca. die 10-fache Menge an Sauerstoff produziert, als sie der Löslichkeit des Sauerstoffs in Wasser entspricht (ca. 0,04 g/l). Die Gasphase (über der Chlordioxidlösung im geschlossenen System) setzt sich hier aus ca. 20 % Sauerstoff und 80 % Chlordioxid zusammen.

Es wurde weiterhin festgestellt, dass Chlordioxidlösungen, die bei Temperaturen oberhalb 30 °C hergestellt wurden, noch bessere Stabilitäten bzw. längere Haltbarkeit aufwiesen.

Vorzugsweise werden entweder die zusammengegebenen Lösungen erwärmt, die beiden bereitgestellten Lösungen erwärmt und anschließend zusammengegeben, oder die Lösungen mit warmem Wasser hergestellt.

Die Erfindung umfasst weiterhin Kits, bei denen das Verfahren mit Hilfe gebrauchsfertig vorkonfektionierter Lösungen durchgeführt werden kann.

Der erfindungsgemäße Kit zur Herstellung von Chlordioxid im Gemisch mit Sauerstoff umfasst gebrauchsfertige Lösungen und/oder trockene Zusammensetzungen, wobei eine gebrauchsfertige Lösung oder trockene Zusammensetzung wenigstens ein Chlorit enthält und eine zweite gebrauchsfertige Lösung oder trockene Zusammensetzung wenigstens ein Peroxomonosulfat und ein Peroxodisulfat enthält und wobei die gebrauchsfertig konfektionierten Reagenzien dergestalt sind, dass sie durch Mischen eine saure wässrige Lösung ergeben.

Nach dem Ablauf der Reaktion kann der pH-Wert der Chlordioxid-Fertiglösung durch Zugabe von Zubereitungen aus Alkalicarbonaten, Erdalkalicarbonaten oder Alkaliphosphaten in flüssiger Form, Pulver oder Tabletten-Form vorzugsweise auf pH 5,0 - 6,5 erhöht werden.

Innerhalb des Kits liegen die gebrauchsfertigen Lösungen in dafür geeigneten Behältnissen vor und werden bei Bedarf, zur Durchführung des Verfahrens, in einem Mischbehälter gemischt. Als Mischbehälter kann einer der Lösungsbehälter vorgesehen sein, in den die andere Lösung zugegeben wird. Die Volumina der Behälter sind entsprechend zu wählen. Die Kits lassen sich außerdem sehr gut in Anlagen für die kontinuierliche oder periodische Herstellung von Chlordioxid einsetzen. Dies ist ohne besondere Anpassung der Anlagen möglich.

Es können auch trockene Zubereitungen eingesetzt werden, so dass der Kit entweder wenigstens zwei trockene Zubereitungen enthält, die für die Durchführung des Verfahrens gemeinsam in Wasser gelöst werden, oder eine trockene Zubereitung und eine gebrauchsfertige Lösung.

Die trockenen Zubereitungen können als Presslinge bzw. Tabletten oder als portionsweise verpacktes Granulat oder Pulver vorliegen.

## Patentansprüche

1. Verfahren zur Herstellung von Chlordioxid im Gemisch mit Sauerstoff durch Reaktion von Chlorit mit Peroxomonosulfat in Gegenwart von Peroxodisulfat als Redoxinitiator in saurer wässriger Lösung.

2. Verfahren nach Anspruch 1, **dadurch gekennzeichnet, dass** als Redoxinitiator Natriumperoxodisulfat verwendet wird.

3. Verfahren nach Anspruch 1 oder 2, **dadurch gekennzeichnet, dass** die Reaktion bei einem pH-Wert zwischen 1,5 und 3,5 durchgeführt wird.

4. Verfahren nach Anspruch 3, **dadurch gekennzeichnet, dass** es in Anwesenheit wenigstens eines sauren Salzes, vorzugsweise eines Hydrogensulfats, durchgeführt wird.

5. Verfahren nach einem der Ansprüche 1 bis 4, **dadurch gekennzeichnet, dass** eine erste Lösung, die Chlorit, vorzugsweise Natriumchlorit enthält, bereitgestellt wird, eine zweite Lösung, die ein Peroxomonosulfat (Caroat), vorzugsweise Kaliumperoxomonosulfat, Peroxodisulfat und optional Hydrogensulfat, vorzugsweise Natriumhydrogensulfat, enthält, bereitgestellt wird, die Lösungen zusammengegeben und vermengt werden.

6. Verfahren nach Anspruch 5, **dadurch gekennzeichnet, dass** die zusammengegebenen Lösungen erwärmt werden.

7. Verfahren nach Anspruch 5, **dadurch gekennzeichnet, dass** die bereitgestellten beiden Lösungen erwärmt und anschließend zusammengegeben werden.

8. Verfahren nach einem der Ansprüche 5 bis 7, **dadurch gekennzeichnet, dass** die Lösungen mit warmem Wasser hergestellt werden.

9. Kit zur Herstellung von Chlordioxid im Gemisch mit Sauerstoff, inbesondere für die Wasserbehandlung, welches gebrauchsfertige wässrige Lösungen und/oder trockene Zusammensetzungen, die für die Auflösung in Wasser vorgesehen sind, aufweist, wobei eine gebrauchsfertige Lösung oder trockene Zusammensetzung wenigstens ein Chlorit enthält und eine zweite gebrauchsfertige Lösung oder trockene Zusammensetzung wenigstens ein Peroxomonosulfat im Gemisch mit wenigstens Peroxodisulfat als Redoxinitiator enthält und wobei die gebrauchsfertig konfektionierten Reagenzien dergestalt sind, dass sie durch Mischen eine saure wässrige Lösung ergeben.

10. Kit nach Anspruch 9, **dadurch gekennzeichnet, dass** wenigstens eine der Lösungen oder trockenen Zusammensetzungen zusätzlich Hydrogensulfat enthält.

11. Kit nach Anspruch 9 oder 10, **dadurch gekennzeichnet, dass** die trockenenen Zusammensetzungen in Form von Presslingen oder Tabletten vorliegen.

## Claims

1. Process for preparing chlorine dioxide in admixture with oxygen by reaction of chlorite with peroxomonosulphate in the presence of peroxodisulphate as redox initiator in acidic aqueous solution.

2. Process according to Claim 1, **characterized in that** sodium peroxodisulphate is used as redox initiator.

3. Process according to Claim 1 or 2, **characterized in that** the reaction is carried out at a pH in the range from 1.5 to 3.5.

4. Process according to Claim 3, **characterized in that** it is carried out in the presence of at least one acidic salt, preferably a hydrogensulphate.

5. Process according to any of Claims 1 to 4, **characterized in that** a first solution which contains chlorite, preferably sodium chlorite, is provided, a second solution which contains a peroxomonosulphate (Caroate), preferably potassium peroxomonosulphate, peroxodisulphate and optionally hydrogensulphate, preferably sodium hydrogensulphate, is provided and the solutions are combined and mixed.

6. Process according to Claim 5, **characterized in that** the combined solutions are heated.

7. Process according to Claim 5, **characterized in that** the two solutions provided are heated and subsequently combined.

8. Process according to any of Claims 5 to 7, **characterized in that** the solutions are prepared using warm water.

9. Kit for preparing chlorine dioxide in admixture with oxygen, in particular for water treatment, which comprises ready-to-use aqueous solutions and/or dry compositions which are intended for dissolution in water, with one ready-to-use solution or dry composition containing at least one chlorite and a second ready-to-use solution or dry composition containing at least one peroxomonosulphate in admixture with at least peroxodisulphate as redox initiator and the ready-to-use off-the-shelf reagents being such that they give an acidic aqueous solution on mixing.

10. Kit according to Claim 9, **characterized in that** at least one of the solutions or dry compositions additionally contains hydrogensulphate.

11. Kit according to Claim 9 or 10, **characterized in that** the dry compositions are in the form of compacts or tablets.

## Revendications

1. Procédé pour la préparation de dioxyde de chlore mélangé à de l'oxygène par réaction d'un chlorite avec un peroxomonosulfate en présence d'un peroxodisulfate en tant qu'initiateur redox en solution aqueuse acide.

2. Procédé selon la revendication 1, **caractérisé en ce que** du peroxodisulfate de sodium est utilisé en tant qu'initiateur redox.

3. Procédé selon la revendication 1 ou 2, **caractérisé en ce que** la reaction est mis en oeuvre à une valeur de pH comprise entre 1,5 et 3,5.

4. Procédé selon la revendication 3, **caractérisé en ce qu'**il est mis en oeuvre en présence d'au moins un sel acide, de préférence un hydrogénosulfate.

5. Procédé selon l'une des revendications 1 à 4, **caractérisé en ce qu'**on prépare une première solution qui contient un chlorite, de préférence du chlorite de sodium ; on prépare une deuxième solution qui contient un peroxomonosulfate (caroate), de préférence du peroxomonosulfate de potassium, un peroxodisulfate et éventuellement un hydrogénosulfate, de préférence de l'hydrogénosulfate de sodium ; on rassemble les solutions et on les mélange.

6. Procédé selon la revendication 5, **caractérisé en ce que** les solutions rassemblées sont chauffées.

7. Procédé selon la revendication 5, **caractérisé en ce que** les deux solutions préparées sont chauffées et ensuite rassemblées.

8. Procédé selon l'une des revendications 5 à 7, **caractérisé en ce que** les solutions sont préparées avec de l'eau chaude.

9. Kit pour préparer du dioxyde de chlore mélangé à de l'oxygène, en particulier pour le traitement de l'eau, qui comprend des solutions aqueuses prêtes à l'emploi et/ou des compositions sèches qui sont prévues pour être dissoutes dans l'eau, dans lequel une solution prête à l'emploi ou composition sèche contient au moins un chlorite et une deuxième solution ou composition sèche qui contient au moins un peroxomonosulfate en mélange avec au moins du peroxodisulfate en tant qu'initiateur redox et dans lequel les réactifs confectionnés prêts à l'emploi sont établis de sorte qu'ils forment par mélange une solution aqueuse acide.

10. Kit selon la revendication 9, **caractérisé en ce qu'**au moins l'une des solutions ou compositions sèches contient en outre un hydrogénosulfate.

11. Kit selon la revendication 9 ou 10, **caractérisé en ce que** les compositions sèches sont sous forme de comprimés ou de cachets.
